# EUROPÄISCHE PATENTSCHRIFT

(11) **EP 0 479 962 B1**
(45) Veröffentlichungstag und Bekanntmachung des Hinweises auf die Patenterteilung: **27.09.1995**
(21) Anmeldenummer: 91906159.8
(22) Anmeldetag: 22.03.1991
(51) Int. Cl.: B60T 8/36

(54) **GEHÄUSEBLOCK FÜR EIN HYDRAULISCHES BREMSSYSTEM**
HOUSING BLOCK FOR HYDRAULIC BRAKE SYSTEM
BLOC-CARTER POUR UN SYSTEME DE FREINAGE HYDRAULIQUE

(30) Priorität: 25.04.1990 DE 4013160
(43) Veröffentlichungstag der Anmeldung: 15.04.1992
(73) Patentinhaber: ROBERT BOSCH GMBH, 70442 Stuttgart (DE)
(72) Erfinder: KEHL, Georg, D-7000 Stuttgart 40 (DE); SCHMITT, Edgar, D-7143 Vaihingen-Enz (DE); SIEGEL, Heinz, D-7000 Stuttgart 40 (DE); EBERSPAECHER, Peter, D-7300 Esslingen (DE); BENZINGER, Roland, D-7000, Stuttgart 31 (DE)
(86) Internationale Anmeldenummer: DE9100253
(87) Internationale Veröffentlichungsnummer: WO9116220

(56) Entgegenhaltungen:
- EP-A- 0 344 544
- WO-A-83/01929
- DE-A- 2 128 168
- GB-A- 2 018 922
- US-A- 4 568 131
- US-A- 4 690 465

## Beschreibung

### Stand der Technik

Die Erfindung geht aus von einem Gehäuseblock für ein hydraulisches Bremssystem nach der Gattung des Patentanspruchs.

Eine durch das Dokument DE-A-2 128 168 bekannte und die Gattung bildende blockiergeschützte Bremsanlage besitzt eine Rückförderpumpe mit einem Kolben, eine Zylinderbohrung in einem Gehäuseblock zur Aufnahme des Kolbens sowie ein Einlaß-Rückschlagventil und ein Auslaß-Rückschlagventil und ist oberhalb des Gehäusesblockes mit einem Einlaß-Magnetventil und über diesem mit einem Auslaß-Magnetventil kombiniert. Unterhalb der Zylinderbohrung und dem Kolben befindet sich eine waagerecht ausgerichtete Aufnahme-Bohrung für einen Dämpfer. Symbolisch angedeutet ist ein Kanal, der vom Auslaß-Magnetventil zu dem Einlaß-Rückschlagventil führt. Es ist kein hauptbremszylinderseitiger und kein radbremszylinderseitiger Anschluß dargestellt. Der zugehörige hydraulische Schaltplan ordnet einer Pumpe die Radbremsen von zwei Rädern zu und sieht je Rad ein Einlaßmagnetventil und ein Auslaßmagnetventil vor.

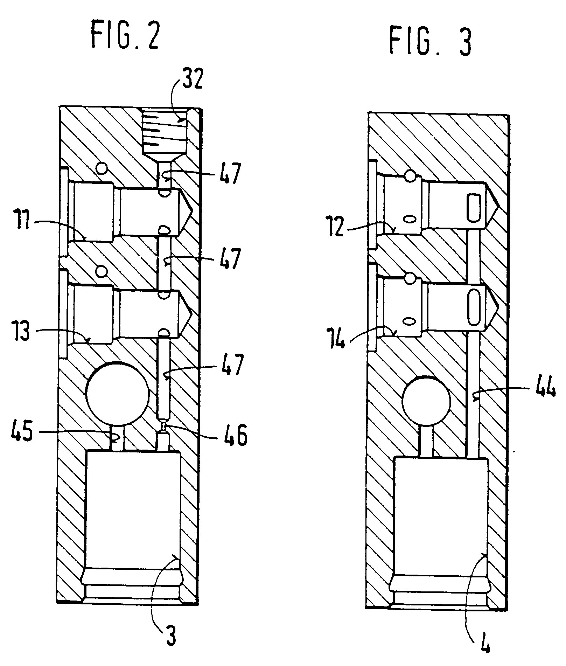

Durch das Dokument US-A-4,568,131 ist für ein hydraulisches Bremssystem mit einem Hauptbremszylinder und mit wenigstens einer Radbremse für ein blockiergeschütztes Fahrzeugrad ein Gehäuseblock bekannt, der einen waagerecht ausgerichteten Zylinder mit einem in diesem verschiebbaren Kolben aufnimmt und in den von oben und von unten her elektromagnetisch aktivierbare Rückschlagventile eingeschraubt sind, derart, daß bei elektromagnetischer Aktivierung der Rückschlagventile und bei periodischer Verschiebung des Kolbens mittels eines antreibbaren Exzenters der Kolben zusammen mit dem Zylinder und den Rückschlagventilen eine Rückförderpumpe bilden zum Zurückfördern von Druckmittel aus der Radbremse in den Hauptbremszylinder, so daß ein Bremsdruck in der Radbremse absinkt und Radblockiergefahr verschwindet. Dabei ist gemäß der Figur 3 des Dokuments das oben befindliche Rückschlagventil mit dem Hauptbremszylinder und das unten befindliche Rückschlagventil mit der Radbremse verbunden. Wenn nach einem Bremsdruckabsenkvorgang in der Radbremse der urspüngliche Bremsdruck zumindest teilweise wieder entstehen soll, sind beide Rückschlagventile zu desaktivieren, damit sie von Druckmittel aus dem Hauptbremszylinder zur Radbremse hin durchströmbar sind. Das Bremssystem ist bei desaktivierten Rückschlagventilen entlüftbar durch Betätigung des Hauptbremszylinders und Öffnen eines Entlüftungsnippels an der Radbremse.

Die Geschwindigkeit, mit der ein Radblockiergefahr verursachender Bremsdruck in der Radbremse absenkbar ist, hängt unter anderem ab von einer ausreichend schnellen Drehbeschleunigung des Exzenters. Da diese gegebenenfalls nachteilig langsam ist, schlägt das Dokument vor, einen Antriebsmotor des Exzenters bereits bei Betätigung der Bremsanlage über einen Bremslichtschalter einzuschalten. Dies ergibt den Nachteil von Geräuschentwicklung und Vibrationen sowie Energieverbrauch, obwohl keine Radblockiergefahr vorzuliegen braucht. Des weiteren tritt unnötiger Verschleiß auf im Antriebsmotor und in der Pumpe. Sollen beispielsweise Bremsdrücke in vier Radbremsen unabhängig voneinander veränderbar sein, so werden vier Zylinder und vier Kolben und vier Paare von elektromagnetisch aktivierbaren Rückschlagventilen benötigt. Dies bedingt einen nachteilig hohen Bauaufwand.

### Vorteile der Erfindung

Der Gehäuseblock mit den kennzeichnenden Merkmalen des Patentanspruchs 1 hat demgegenüber den Vorteil, daß das Bremssystem leicht zu entlüften ist und daß die von den RadBremszylindern zurückfließende Flüssigkeit ein stetes Gefälle bis zum Speicher hat.

Weitere vorteilhafte Merkmale ergeben sich aus den Unteransprüchen und aus der Beschreibung.

### Zeichnung

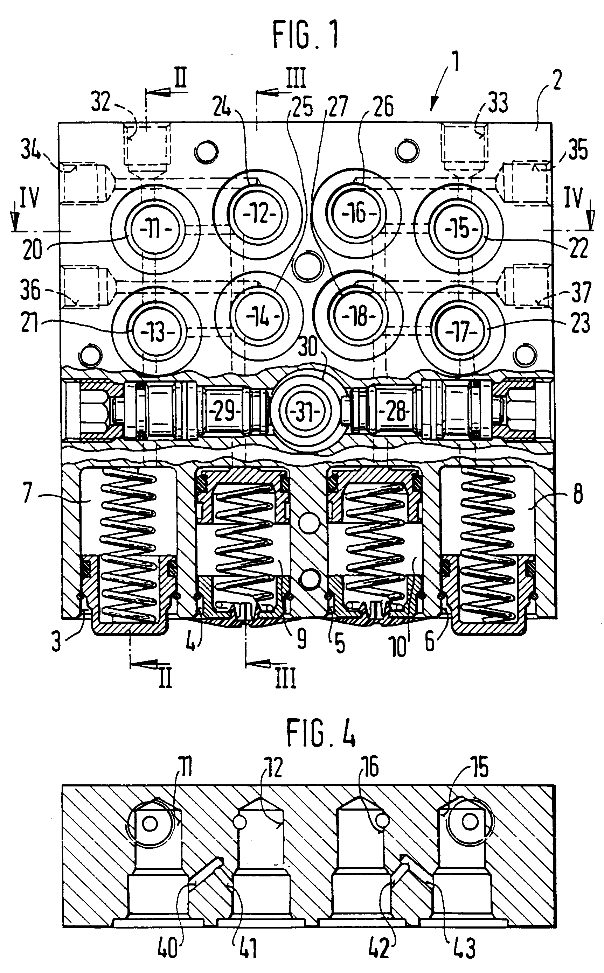

Ein Ausführungsbeispiel der Erfindung ist in der Zeichnung dargestellt und in der nachfolgenden Beschreibung näher erläutert. Es zeigen Fiugr 1 einen Gehäuseblock in Seitenansicht zum Teil im Schnitt, Figur 2 einen Schnitt nach der Linie II-II in Figur 1, Figur 3 einen Schnitt nach der Linie III-III in Figur 1 und Figur 4 einen Schnitt nach der Linie IV-IV in Figur 1.

### Beschreibung des Ausführungsbeispiels

Ein mit vier Ausgängen für den Anschluß von vier Bremszylindern versehener 4-Kanal-Gehäuseblock 1 hat eine Grundplatte 2, in der von der in der Zeichnung unteren Schmalseite her vier Aufnahme-Bohrungen 3, 4, 5, 6 für je zwei Dämpfer 7 und Bund für je zwei Speicher 9 und 10 vorgesehen sind. Andererseits trägt die Grundplatte 2 auf ihrer senkrechten Breitseite acht Aufnahmebohrungen 11, 12, 13, 14, 15, 16, 17, 18 für acht Magnetventile, je vier Einlaß-Magnetventile 20, 21, 22, 23 und je vier Auslaß-Magnetventile 24, 25, 26, 27. Etwa in der Mitte der Breitseite der Grundplatte 2 sind zwei sich gleichachsig einander gegenüberliegende Rückförderpumpen 28 und 29 sowie ein Antriebsexzenter 30 eines Motors 31 vorgesehen.

Die Grundplatte 2 hat desweiteren an ihren anderen drei Schmalseiten sechs Anschluß-Bohrungen 32, 33, 34, 35, 36, 37, zwei (32, 33) für zwei Hauptzylinder (Tandem- oder Parallelanordnung) und zwei (34, 35) für die beiden Rad-Bremszylinder der Vorderräder und zwei (36, 37) für die der Hinterräder.

Wie die Figur 1 und die Schnittdarstellungen nach den Figuren 2 und 3 erkennen lassen, sind bei dieser Bauart die Speicher/und Dämpfer in Einbaulage unten angeordnet und von den darüberliegenden Magnetventilen 20 bis 27 liegen die Auslaß-Magnetventile 24, 25, 26, 27 höher als die ihnen jeweils zugeordneten Einlaß-Magnetventile 20, 21, 22, 23. Das hat den Vorteil, daß beim Entlüften des hydraulischen Systems die Luft über die Auslaß-Magnetventile 24, 25, 26, 27 zu den Rad-Bremszylindern hin abströmen kann. Andererseits ist zum Speicher 9 bzw. 10 hin über einen Kanal 44 ein Gefälle geschaffen, durch das die Flüssigkeit automatisch zurückfließen kann. Ebenfalls durchströmt ist über einen Kanal 45 der Dämpfer 7 bzw. 8 von der Rückförderpumpe her, wobei die Flüssigkeit über eine Drossel 46 und einen Kanal 47 zum Hauptzylinder-Anschluß 32 gelangt (vergleiche Figur 2).

Das Schnittbild nach der Figur 4 zeigt, daß die Aufnahme-Bohrungen 11/12; 13/14; 15/16; 17/18 für je ein Paar (hier 11/12 und 15/16) von Einlaß- und Auslaß-Magnetventilen durch zwei Schrägkanäle 40/41 und 42/43 miteinander verbunden sind. Diese Schrägkanäle 40/41 und 42/43 haben keine nach außen führende Öffnungen. Stopfen und Kugeldichtungen sind deshalb hier überflüssig.

## Patentansprüche

1. Gehäuseblock für ein hydraulisches Bremssystem mit blockiergeschützten Fahrzeugrädern, mit Bohrungen zur Aufnahme hydraulischer Elemente, wie Pumpe mit Kolben und Rückschlagventilen, Dämpfer, Speicher und Druckmittelkanäle, in Kombination mit wenigstens einem Paar aus einem Einlaß-Magnetventil und einem Auslaß-Magnetventil, wobei das Auslaß-Magnetventil höher als das Einlaß-Magnetventil angeordnet ist, dadurch gekennzeichnet, daß der Gehäuseblock (2) oben wenigstens eine hauptzylinderseitige Anschlußbohrung (32) hat, von der ausgehend sich nach unten ein Kanal (47) erstreckt, der mit einer im Gehäuseblock (2) befindlichen sacklochartigen Aufnahmebohrung (11) für das Einlaß-Magnetventil (20) kommuniziert, mit einer weiteren im Gehäuseblock befindlichen Aufnahmebohrung (12), die hoher als die Aufnahmebohrung (11) des Einlaß-Magnetventils (20) angeordnet ist und das Auslaß-Magnetventil (24) aufnimmt, daß die Aufnahmebohrung (11) des Einlaß-Magnetventils (20) und die Aufnahmebohrung (12) des Auslaß-Magnetventils (24) mittels durchströmbaren Kanälen (40, 41) miteinander verbunden sind, und daß von der Aufnahmebohrung (12) des Auslaß-Magnetventils (24) ein Kanal ausgeht zu einer radbremszylinderseitigen Anschlußbohrung (34).

2. Gehäuseblock nach Anspruch 1, dadurch gekennzeichnet, daß die Kanäle (40, 41; 42, 43) als Paar von den aus Aufnahme-Bohrungen (11, 12, 13, 14, 15, 16, 17, 18) für die Magnetventile (20 bis 27) ausgehenden Schrägkanälen ausgebildet sind, die einander winkelig treffen.

3. Gehäuseblock nach Anspruch 1, dadurch gekennzeichnet, daß eine Aufnahme-Bohrung (3) für den Dämpfer (7) von der Unterseite des Gehäuseblockes (2) ausgeht und sich senkrecht erstreckt, und daß eine Verlängerung des von der hauptzylinderseitigen Anschlußbohrung (32) ausgehenden Kanals (47) zu dem Dämpfer (7) führt.

4. Gehäuseblock nach Anspruch 1 oder 3, dadurch gekennzeichnet, daß von der Unterseite des Gehäuseblockes (2) senkrecht eine Aufnahme-Bohrung (4) ausgeht für einen Speicher (9), der durch einen von der Aufnahmebohrung (12) des Auslaß-Magnetventils (24) nach unten führenden Kanal (44) füllbar und von der Pumpe (29) entleerbar ist.

5. Gehäuseblock nach Anspruch 3 und 4, dadurch gekennzeichnet, daß die Aufnahme-Bohrungen (3, 4) des Dämpfers (7) und des Speichers (9) nebeneinander angeordnet sind.

## Claims

1. Housing block for a hydraulic brake system having anti-lock vehicle wheels, with bores for receiving hydraulic elements, such as a pump with pistons and non-return valves, dampers, reservoirs and pressure-medium ducts, in combination with at least one pair of an inlet solenoid valve and an outlet solenoid valve, the outlet solenoid valve being arranged higher than the inlet solenoid valve, characterized in that the housing block (2) has at the top at least one connecting bore (32) which is located on the master-cylinder side and from which extends downwards a duct (47) communicating with a receiving bore (11) for the inlet solenoid valve (20), the said receiving bore being located in the housing block (2) and resembling a blind hole, with a further receiving bore (12) which is located in the housing block and which is arranged higher than the receiving bore (11) of the inlet solenoid valve (20) and receives the outlet solenoid valve (24), in that the receiving bore (11) of the inlet solenoid valve (20) and the receiving bore (12) of the outlet solenoid valve (24) are connected to one another by means of ducts (40, 41) through which a flow can pass, and in that a duct extends from the receiving bore (12) of the outlet solenoid valve (24) to a connecting bore (34) located on the same side as the wheel-brake cylinders.

2. Housing block according to Claim 1, characterized in that the ducts (40, 41; 42, 43) are designed as a pair of oblique ducts which extend from receiving bores (11, 12, 13, 14, 15, 16, 17, 18) for the solenoid valves (20 to 27) and which meet one another at an angle.

3. Housing block according to Claim 1, characterized in that a receiving bore (3) for the damper (7) starts from the underside of the housing block (2) and extends vertically, and in that a prolongation of the duct (47) extending from the connecting bore (32) located on the master-cylinder side leads to the damper (7).

4. Housing block according to Claim 1 or 3, characterized in that a receiving bore (4) extends vertically from the underside of the housing block (2), for a reservoir (9) which can be filled through a duct (44) leading downwards from the receiving bore (12) of the outlet solenoid valve (24) and which can be emptied by the pump (29).

5. Housing block according to Claims 3 and 4, characterized in that the receiving bores (3, 4) of the damper (7) and of the reservoir (9) are arranged next to one another.

## Revendications

1. Bloc-carter pour un système hydraulique de freinage, avec des roues de véhicule protégées contre le risque de blocage, avec des alésages servant à recevoir des éléments hydrauliques, tels qu'une pompe avec un piston et des soupapes anti-retour, des amortisseurs, des réservoirs et des canaux de fluide sous pression, en combinaison avec au moins une paire de vannes se composant d'une électrovanne d'admission et d'une électrovanne d'évacuation, l'électrovanne d'échappement étant disposée plus haut que l'électrovanne d'admission, bloc-carter (2) caractérisé par le fait qu'il a en haut au moins un alésage de raccordement (32), situé du côté du maître-cylindre, à partir duquel s'étend vers le bas un canal (47), qui communique avec un alésage de réception (11), se trouvant dans le bloc-carter, alésage de réception qui est disposé plus haut que l'alésage de réception (11) de l'électrovanne d'admission (20), et qui reçoit l'électrovanne d'évacuation (24), en ce que l'alésage de réception (11) de l'électrovanne d'admission (20) et l'alésage de réception (12) de l'électrovanne d'évacuation (24) sont reliés l'un avec l'autre et en ce qu'un canal part de l'alésage de réception (12) de l'électrovanne d'évacuation (24) et va à un alésage de raccordement (34) situé du côté des cylindres de freinage des roues.

2. Bloc-carter selon la revendication 1, caractérisé en ce que les canaux (40, 41 ; 42, 43) sont constitués comme des paires de canaux obliques partant des alésages de réception (11, 12, 13, 14, 15, 16, 17, 18) pour les électrovannes (20 à 27), canaux obliques qui se rejoignent en formant un angle.

3. Bloc-carter selon la revendication 1, caractérisé en ce qu'un alésage de réception (3) pour l'amortisseur (7) part du côté inférieur du bloc-carter (2) et s'étend perpendiculairement et en ce qu'un prolongement du canal (47), qui part de l'alésage de raccordement (32), situé du côté du maître cylindre, mène à l'amortisseur (7).

4. Bloc-carter selon la revendication 1 ou 3, caractérisé en ce qu'un alésage de réception (4) part verticalement du côté inférieur du bloc-carter (2) pour un réservoir (9), qui peut être rempli par un canal (44) allant de l'alésage de réception (12) de l'électrovanne d'évacuation (24) vers le bas et peut être vidé par la pompe (29).

5. Bloc-carter selon les revendications 3 ou 4, caractérisé en ce que les alésages de réception (3, 4) de l'amortisseur (7) et du réservoir (9) sont disposés côte à côte.
